# EUROPEAN PATENT SPECIFICATION

(11) **EP 4 781 247 B1**
(45) Date of publication and mention of the grant of the patent: **23.09.2026**
(21) Application number: 24847319.1
(22) Date of filing: 26.12.2024
(51) Int. Cl.: G02F 1/1676

(54) **PIEZO-ELECTROPHORETIC FILMS AND DISPLAYS, AND METHODS FOR MANUFACTURING THE SAME**
PIEZOELEKTRISCHE FILME UND ANZEIGEN UND VERFAHREN ZUR HERSTELLUNG DAVON
FILMS PIÉZO-ÉLECTROPHORÉTIQUES ET AFFICHAGES, ET LEURS PROCÉDÉS DE FABRICATION

(30) Priority: 31.12.2023 US 202363616721 P
(43) Date of publication of application: 29.07.2026
(73) Proprietor: E Ink Corporation, Billerica, Massachusetts 01821-4165 (US)
(72) Inventor: MATUS, Yuriy Borisovich, Fremont, California 94538 (US); GU, Haiyan, Fremont, California 94538 (US)
(74) Representative: Harris, Jennifer Lucy
(86) International application number: PCT/US2024/061985
(87) International publication number: WO 2025/144956

(56) References cited:
- US-A1- 2012 038 969
- US-A1- 2023 276 710
- US-A1- 2023 324 761

## Description

### CROSS-REFERENCE TO RELATED APPLICATIONS

This application claims priority to U.S. Provisional Application No. 63/616,721, filed on December 31, 2023.

### FIELD OF THE INVENTION

The present invention relates to electrophoretic displays, and in particular, to thin piezo-electrophoretic displays having an improved contrast ratio, and methods for making the same.

### BACKGROUND OF THE INVENTION

An electrophoretic display (EPD) is a non-emissive device based on the electrophoresis of charged pigment particles dispersed in a solvent or solvent mixture. The display typically comprises two electrodes placed opposing each other which provide an electric field to drive the motion of the charged pigment particles. One of the electrodes is usually transparent. When a voltage difference is imposed between the two electrodes, the pigment particle(s) migrate to one side or the other causing either the color of the pigment particles or the color of the solvent (if colored) to be seen from the viewing side. The electrophoretic fluid typically includes a non-polar solvent and one or more sets of charged particles. The particles may have different optical properties (colors), different charges (positive or negative), different charge magnitudes (zeta potentials), and/or different absorptive properties (broadly light-absorbing, broadly light-reflecting, or selectively-absorbing or selectively reflecting). In the instance where there are multiple particle sets with opposite charge polarities, application of an electric field may cause a particle of one set to appear at the viewing surface while the other particle is driven away from the viewing surface.

Many electrophoretic displays are bi-stable meaning their optical state persists even after the activating electric field is removed. Bistability is mostly due to induced dipole charge layers forming around the charged pigments due to complex interactions between the pigments, charge control agents, and free polymers dispersed in the solvent. A bistable display can last for years in the last-addressed optical state before being switched again by the application of a new driving field.

Driving an electrophoretic display requires a power source to provide the electric field between the electrodes. The power source is typically a battery, which provides power to the electrodes via driving circuitry. One or more electrodes may be incorporated into an active matrix backplane. The power supply could also be, e.g., a photovoltaic cell, a fuel cell, or a power supply that operates from wall current. The power supply could also be a piezoelectric element which creates charge through physical motion or thermal expansion, as described in US Patent No 5930026. In all of these examples, some type of driving circuitry is required to provide an electrical pathway between the power source and the electrodes and typically, the circuitry includes control elements such as switches, transistors, etc. In most instances, the circuitry is fairly routine, however it typically adds bulk and structural limitations (i.e., not flexible or twistable) to the final display.

Further, for many applications, it is desirable to reduce the overall thickness of the display. However, the thickness of a layer of piezoelectric material generally has a direct correlation to the amplitude of the voltage the piezoelectric material is capable of generating in response to mechanical stress. That is, reducing the thickness of the piezoelectric material also reduces the magnitude of the voltage the piezoelectric material generates under stress (and vice versa). Accordingly, in order to generate a voltage potential large enough to cause sufficient movement of charged pigment particles needed to achieve an acceptable contrast ratio, conventional piezo-electrophoretic displays have typically incorporated a layer of piezoelectric material too thick for such displays to be viable for use in applications requiring them to be durable and substantially unnoticeable when incorporated into thin, low-profile final products such as paper or bank notes.

Further, conventional piezo-electrophoretic displays are typically constructed using continuous layers of piezoelectric material that generate charge outside of the desired area when subject to mechanical stress. For example, if a mechanical stress is applied to an area of the piezoelectric layer that is larger than the portion that includes a security seal or image, the piezoelectric material in the portion outside the security seal or image will generate charge that will cause the charged pigments in proximity to those portions to move.

The effects described above can cause a gradient of color in the image revealed by bending a portion of the piezo-electrophoretic display. Accordingly, the image may not have sharp edges due to the charges spilling or spreading sidewise into unbent portions of the piezo-electrophoretic display. These effects are similar to the blooming or crosstalk artifacts observed in electrophoretic displays having an actively-driven array of pixels, and can cause blurriness and other visual artifacts that are distracting or make it difficult to reliably view the security seal or image.

Relevant background art useful for understanding the invention, according to Rule 42(1)(b) EPC include: US2023/324761, US2023/276710 and US2012/038969.

### SUMMARY OF THE INVENTION

There is therefore a need for very simple, flexible, durable, and thin electrophoretic displays for applications such as security markers, sensors, and indicators. There is also a need for piezo-electrophoretic displays that are sufficiently thin and durable to be used for such applications while also providing a high contrast ratio.

Accordingly, in one aspect, the subject matter disclosed herein includes a method for making a piezo-electrophoretic display including a first electrode and a second electrode. The method includes forming a layer of microcells. The microcells have a bottom, walls, and a top opening. The method also includes filling the microcells with an electrophoretic medium through the top opening, and sealing off the top opening of the filled microcells with a water-soluble polymer to create a sealing layer. The method also includes bonding the second electrode with the sealing layer. The method also includes processing a film of piezoelectric material to form a piezoelectric layer including one or more voids in the piezoelectric material. The method also includes bonding the piezoelectric layer with the layer of microcells on a surface opposite to the sealing layer, and forming the first electrode by depositing an electrically-conductive material onto the piezoelectric layer. The electrically-conductive material fills the one or more voids in the piezoelectric material and coats a surface of the piezoelectric layer.

In some embodiments, the electrically-conductive material of the first electrode comprises poly(3,4-ethylenedioxythiophene) polystyrene sulfonate (PEDOT-PSS). In some embodiments, the electrically-conductive material of the first electrode that fills the one or more voids in the piezoelectric material is in contact with the layer of microcells. In some embodiments, the second electrode comprises an electrically-conductive material coupled to a substrate.

In some embodiments, the method further includes bonding the piezo-electrophoretic display to a target object comprising one of paper, a bank note, and a currency bill.

In some embodiments, the electrophoretic medium includes a non-polar fluid and charged pigment particles that move toward or away from the piezoelectric layer when the piezoelectric layer is mechanically stressed, and the non-polar fluid and charged pigment particles are sealed in the microcells with the sealing layer. In some embodiments, the method of claim 1 wherein the piezoelectric layer is polarized with an electric field.

In another aspect, the subject matter disclosed herein includes a method for making a piezo-electrophoretic display. The method includes processing a film of piezoelectric material on a release film to form a piezoelectric layer including one or more voids in the piezoelectric material, and forming a first electrode by depositing an electrically-conductive material onto the piezoelectric layer. The electrically-conductive material fills the one or more voids in the piezoelectric material and coats a surface of the piezoelectric layer. The method also includes forming a layer of microcells, where the microcells have a bottom, walls, and a top opening, and filling the microcells with an electrophoretic medium through the top opening. The method also includes sealing off the top opening of the filled microcells with a water-soluble polymer to create a sealing layer, and bonding a second electrode with the sealing layer. The method also includes removing the release film from the piezoelectric layer, and bonding the piezoelectric layer with the layer of microcells on a surface opposite to the sealing layer.

In some embodiments, the electrically-conductive material of the first electrode that fills the one or more voids in the piezoelectric material is in contact with the layer of microcells.

In some embodiments, the second electrode comprises an electrically-conductive material coupled to a substrate. In some embodiments, the electrically-conductive material of the first electrode comprises poly(3,4-ethylenedioxythiophene) polystyrene sulfonate (PEDOT-PSS).

In some embodiments, the method further includes bonding the piezo-electrophoretic display to a target object including one of paper, a bank note, and a currency bill.

In some embodiments, the electrophoretic medium includes a non-polar fluid and charged pigment particles that move toward or away from the piezoelectric layer when the piezoelectric layer is mechanically stressed, and the non-polar fluid and charged pigment particles are sealed in the microcells with the sealing layer. In some embodiments, the piezoelectric layer is polarized with an electric field.

In another aspect, the subject matter disclosed herein includes a method for making a piezo-electrophoretic display. The method includes bonding a first electrode with a piezoelectric layer including polyvinylidene fluoride (PVDF). The method also includes forming one or more conductive segments on a surface of the piezoelectric layer opposite to the first electrode. The method also includes forming a layer of microcells that have a bottom, walls, and a top opening, filling the microcells with an electrophoretic medium through the top opening, and sealing off the top opening of the filled microcells with a water-soluble polymer to create a sealing layer. The method also includes bonding a second electrode with the sealing layer, and bonding the piezoelectric layer and the one or more conductive segments with the layer of microcells on a surface opposite to the sealing layer.

In some embodiments, the first electrode comprises an electrically-conductive material coupled to a substrate.

In some embodiments, the electrically-conductive material of the second electrode comprises poly(3,4-ethylenedioxythiophene) polystyrene sulfonate (PEDOT-PSS).

In some embodiments, the method further includes bonding the piezo-electrophoretic display to a target object including one of paper, a bank note, and a currency bill. In some embodiments, the piezoelectric layer is polarized with an electric field.

In some embodiments, the one or more conductive segments are approximately 50-100nm in thickness. In some embodiments, the one or more conductive segments comprise poly(3,4-ethylenedioxythiophene) polystyrene sulfonate (PEDOT-PSS).

In some embodiments, the electrophoretic medium includes a non-polar fluid and charged pigment particles that move toward or away from the piezoelectric layer when the piezoelectric layer is mechanically stressed, and the non-polar fluid and charged pigment particles are sealed in the microcells with the sealing layer.

### BRIEF DESCRIPTION OF DRAWINGS

Additional details of one or more embodiments of the subject matter described in this specification are set forth in the accompanying drawings and the description below. Other features, aspects, and advantages of the subject matter will become apparent from the descriptions contained herein and the accompanying drawings. The drawings are not necessarily to scale and elements of similar structures are generally annotated with like reference numerals for illustrative purposes throughout the drawings. However, the specific properties and functions of elements in different embodiments may not be identical. Further, the drawings are only intended to facilitate the description of the subject matter. The drawings do not illustrate every aspect of the described embodiments and do not limit the scope of the present disclosure or claims.
FIG. 1A is a schematic cross sectional view of an exemplary conventional piezo-electrophoretic display.
FIG. 1B is a schematic cross sectional view of another exemplary conventional piezo-electrophoretic display.
FIG. 2 is a schematic cross sectional view of an exemplary conventional piezo-electrophoretic display upon application of mechanical stress.
FIG. 3 shows an enlarged view of a partial cross section of a piezo-electrophoretic display in accordance with the subject matter disclosed herein.
FIG. 4 illustrates an exemplary equivalent circuit of the enlarged cross section shown in FIG. 3.
FIG. 5 shows an enlarged view of a partial cross section of a piezo-electrophoretic display in accordance with the subject matter disclosed herein.
FIG. 6 illustrates an exemplary equivalent circuit of the enlarged cross section shown in FIG. 5.
FIG. 7A shows a cross section of a piezo-electrophoretic display in accordance with the subject matter disclosed herein.
FIG. 7B shows a top view of a piezo-electrophoretic display with the first electrode not shown.
FIG. 7C shows a top view of a piezo-electrophoretic display with the first electrode not shown.
FIG. 8A shows cross section of a piezo-electrophoretic display being formed in accordance with the subject matter disclosed herein.
FIG. 8B shows a cross section of a piezo-electrophoretic display in accordance with the subject matter disclosed herein.

### DETAILED DESCRIPTION OF THE INVENTION

Low-profile piezo-electrophoretic films and display films including low profile piezo-electrophoretic films are disclosed herein. In some embodiments, the piezoelectric material of the piezo-electrophoretic films can be patterned with high-voltage electric fields after fabrication of the piezo-electrophoretic films. This feature allows a final user to address the piezoelectric materials with, e.g., a corona discharge at the point of production, which may include, e.g., a bar code or a serial number that is only viewable when the piezo-electrophoretic film is manipulated. Other piezo-electrophoretic displays and films described herein include features to improve the contrast ratio of the display without increasing the overall thickness of the display. Such films are useful as security markers, authentication films, or sensors. The films are generally flexible. Some films are less than 100 µm in thickness. In some embodiments, the piezo-electrophoretic films are less than 50 µm and foldable without breaking. Displays formed with the films do not require an external power source.

The term "electro-optic", as applied to a material or a display, is used herein in its conventional meaning in the imaging art to refer to a material having first and second display states differing in at least one optical property, the material being changed from its first to its second display state by application of an electric field to the material. Although the optical property is typically color perceptible to the human eye, it may be another optical property, such as optical transmission, reflectance, luminescence or, in the case of displays intended for machine reading, pseudo-color in the sense of a change in reflectance of electromagnetic wavelengths outside the visible range.

The terms "bistable" and "bistability" are used herein in their conventional meaning in the art to refer to displays comprising display elements having first and second display states differing in at least one optical property, and such that after any given element has been driven, by means of an addressing pulse of finite duration, to assume either its first or second display state, after the addressing pulse has terminated, that state will persist for at least several times, for example at least four times, the minimum duration of the addressing pulse required to change the state of the display element. It is shown in U.S. Patent No. 7,170,670 that some particle-based electrophoretic displays capable of gray scale are stable not only in their extreme black and white states but also in their intermediate gray states, and the same is true of some other types of electro-optic displays. This type of display is properly called "multi-stable" rather than bistable, although for convenience the term "bistable" may be used herein to cover both bistable and multi-stable displays.

The term "gray state" is used herein in its conventional meaning in the imaging art to refer to a state intermediate two extreme optical states of a pixel, and does not necessarily imply a black-white transition between these two extreme states. For example, several of the E Ink patents and published applications referred to below describe electrophoretic displays in which the extreme states are white and deep blue, so that an intermediate "gray state" would actually be pale blue. Indeed, as already mentioned, the change in optical state may not be a color change at all. The terms "black" and "white" may be used hereinafter to refer to the two extreme optical states of a display, and should be understood as normally including extreme optical states which are not strictly black and white, for example, the aforementioned white and dark blue states. The term "monochrome" may be used hereinafter to denote a display or drive scheme which only drives pixels to their two extreme optical states with no intervening gray states.

The term "pixel" is used herein in its conventional meaning in the display art to mean the smallest unit of a display capable of generating all the colors which the display itself can show. In a full color display, typically each pixel is composed of a plurality of sub-pixels each of which can display less than all the colors which the display itself can show. For example, in most conventional full color displays, each pixel is composed of a red sub-pixel, a green sub-pixel, a blue sub-pixel, and optionally a white sub-pixel, with each of the sub-pixels being capable of displaying a range of colors from black to the brightest version of its specified color.

Several types of electro-optic displays are known. One type of electro-optic display uses an electrochromic medium, for example an electrochromic medium in the form of a nanochromic film comprising an electrode formed at least in part from a semi-conducting metal oxide and a plurality of dye molecules capable of reversible color change attached to the electrode; see, for example O'Regan, B., et al., Nature 1991, 353, 737; and Wood, D., Information Display, 18(3), 24 (March 2002). See also Bach, U., et al., Adv. Mater., 2002, 14(11), 845. Nanochromic films of this type are also described, for example, in U.S. Patents Nos. 6,301,038; 6,870,657; and 6,950,220. This type of medium is also typically bistable.

Another type of electro-optic display is an electro-wetting display developed by Philips and described in Hayes, R.A., et al., "Video-Speed Electronic Paper Based on Electrowetting", Nature, 425, 383-385 (2003). It is shown in U.S. Patent No. 7,420,549 that such electro-wetting displays can be made bistable.

One type of electro-optic display, which has been the subject of intense research and development for a number of years, is the particle-based electrophoretic display, in which a plurality of charged particles move through a fluid under the influence of an electric field. Electrophoretic displays can have attributes of good brightness and contrast, wide viewing angles, state bistability, and low power consumption when compared with liquid crystal displays.

An electrophoretic display normally comprises a layer of electrophoretic material and at least two other layers disposed on opposed sides of the electrophoretic material, one of these two layers being an electrode layer. In most such displays both the layers are electrode layers, and one or both of the electrode layers are patterned to define the pixels of the display. For example, one electrode layer may be patterned into elongate row electrodes and the other into elongate column electrodes running at right angles to the row electrodes, the pixels being defined by the intersections of the row and column electrodes. Alternatively, and more commonly, one electrode layer has the form of a single continuous electrode and the other electrode layer is patterned into a matrix of pixel electrodes, each of which defines one pixel of the display. In another type of electrophoretic display, which is intended for use with a stylus, print head or similar movable electrode separate from the display, only one of the layers adjacent the electrophoretic layer comprises an electrode, the layer on the opposed side of the electrophoretic layer typically being a protective layer intended to prevent the movable electrode damaging the electrophoretic layer.

Numerous patents and applications assigned to or in the names of the Massachusetts Institute of Technology (MIT) and E Ink Corporation describe various technologies used in encapsulated electrophoretic and other electro-optic media. Such encapsulated media comprise numerous small capsules, each of which itself comprises an internal phase containing electrophoretically-mobile particles in a fluid medium, and a capsule wall surrounding the internal phase. Typically, the capsules are themselves held within a polymeric binder to form a coherent layer positioned between two electrodes. The technologies described in these patents and applications include:
(a) Electrophoretic particles, fluids and fluid additives; see for example U.S. Patents Nos. 7,002,728 and 7,679,814;
(b) Capsules, binders and encapsulation processes; see for example U.S. Patents Nos. 6,922,276 and 7,411,719;
(c) Films and sub-assemblies containing electro-optic materials; see for example U.S. Patents Nos. 6,982,178 and 7,839,564;
(d) Backplanes, adhesive layers and other auxiliary layers and methods used in displays; see for example U.S. Patents Nos. 7,116,318 and 7,535,624;
(e) Color formation and color adjustment; see for example U.S. Patents Nos. 7,075,502 and 7,839,564;
(f) Methods for driving displays; see for example U.S. Patents Nos. 7,012,600 and 7,453,445;
(g) Applications of displays; see for example U.S. Patents Nos. 7,312,784 and 8,009,348;
(h) Non-electrophoretic displays, as described in U.S. Patents Nos. 6,241,921; 6,950,220; 7,420,549 and 8,319,759; and U.S. Patent Application Publication No. 2012/0293858;
(i) Microcell structures, wall materials, and methods of forming microcells; see for example United States Patents Nos. 7,072,095 and 9,279,906; and
(j) Methods for filling and sealing microcells; see for example United States Patents Nos. 7,144,942 and 7,715,088.

Many of the aforementioned patents and applications recognize that the walls surrounding the discrete microcapsules in an encapsulated electrophoretic medium could be replaced by a continuous phase, thus producing a so-called polymer-dispersed electrophoretic display, in which the electrophoretic medium comprises a plurality of discrete droplets of an electrophoretic fluid and a continuous phase of a polymeric material, and that the discrete droplets of electrophoretic fluid within such a polymer-dispersed electrophoretic display may be regarded as capsules or microcapsules even though no discrete capsule membrane is associated with each individual droplet; see for example, the aforementioned U.S. Patent No. 6,866,760. Accordingly, for purposes of the present application, such polymer-dispersed electrophoretic media are regarded as sub-species of encapsulated electrophoretic media.

A related type of electrophoretic display is a microcell electrophoretic display, also known as MICROCUP^{®}. In a microcell electrophoretic display, the charged particles and the fluid are not encapsulated within microcapsules but instead are retained within a plurality of cavities formed within a carrier medium, typically a polymeric film. See, for example, U.S. Patents Nos. 6,672,921 and 6,788,449.

Although electrophoretic media are often opaque (since, for example, in many electrophoretic media, the particles substantially block transmission of visible light through the display) and operate in a reflective mode, many electrophoretic displays can be made to operate in a so-called "shutter mode" in which one display state is substantially opaque and one is light-transmissive. See, for example, U.S. Patents Nos. 5,872,552; 6,130,774; 6,144,361; 6,172,798; 6,271,823; 6,225,971; and 6,184,856. Dielectrophoretic displays, which are similar to electrophoretic displays but rely upon variations in electric field strength, can operate in a similar mode; see U.S. Patent No. 4,418,346. Other types of electro-optic displays may also be capable of operating in shutter mode. Electro-optic media operating in shutter mode may be useful in multi-layer structures for full color displays; in such structures, at least one layer adjacent the viewing surface of the display operates in shutter mode to expose or conceal a second layer more distant from the viewing surface.

An encapsulated electrophoretic display typically does not suffer from the clustering and settling failure mode of traditional electrophoretic devices and provides further advantages, such as the ability to print or coat the display on a wide variety of flexible and rigid substrates. (Use of the word "printing" is intended to include all forms of printing and coating, including, but without limitation: pre-metered coatings such as patch die coating, slot or extrusion coating, slide or cascade coating, curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet printing processes; electrophoretic deposition (See U.S. Patent No. 7,339,715); and other similar techniques.) Thus, the resulting display can be flexible. Further, because the display medium can be printed, using a variety of methods, the display itself can be made inexpensively.

The aforementioned U.S. Patent No. 6,982,178 describes a method of assembling a solid electro-optic display (including an encapsulated electrophoretic display) which is well adapted for mass production. Essentially, this patent describes a so-called "front plane laminate" ("FPL") which comprises, in order, a light-transmissive electrically-conductive layer; a layer of a solid electro-optic medium in electrical contact with the electrically-conductive layer; an adhesive layer; and a release sheet. Typically, the light-transmissive electrically-conductive layer will be carried on a light-transmissive substrate, which is preferably flexible, in the sense that the substrate can be manually wrapped around a drum (say) 10 inches (254 mm) in diameter without permanent deformation. The term "light-transmissive" is used in this patent and herein to mean that the layer thus designated transmits sufficient light to enable an observer, looking through that layer, to observe the change in display states of the electro-optic medium, which will normally be viewed through the electrically-conductive layer and adjacent substrate (if present); in cases where the electro-optic medium displays a change in reflectivity at non-visible wavelengths, the term "light-transmissive" should of course be interpreted to refer to transmission of the relevant non-visible wavelengths. The substrate will typically be a polymeric film, and will normally have a thickness in the range of about 1 to about 25 mil (25 to 634 µm), preferably about 2 to about 10 mil (51 to 254 µm). The electrically-conductive layer is conveniently a thin metal or metal oxide layer of, for example, aluminum or ITO, or may be a conductive polymer. Poly (ethylene terephthalate) (PET) films coated with aluminum or ITO are available commercially, for example as "aluminized Mylar" ("Mylar" is a Registered Trade Mark) from E.I. du Pont de Nemours & Company, Wilmington DE, and such commercial materials may be used with good results in the front plane laminate.

Assembly of an electro-optic display using such a front plane laminate may be effected by removing the release sheet from the front plane laminate and contacting the adhesive layer with the backplane under conditions effective to cause the adhesive layer to adhere to the backplane, thereby securing the adhesive layer, layer of electro-optic medium and electrically-conductive layer to the backplane. This process is well-adapted to mass production since the front plane laminate may be mass produced, typically using roll-to-roll coating techniques, and then cut into pieces of any size needed for use with specific backplanes.

U.S. Patent No. 7,561,324 describes a so-called "double release sheet" which is essentially a simplified version of the front plane laminate of the aforementioned U.S. Patent No. 6,982,178. One form of the double release sheet comprises a layer of a solid electro-optic medium sandwiched between two adhesive layers, one or both of the adhesive layers being covered by a release sheet. Another form of the double release sheet comprises a layer of a solid electro-optic medium sandwiched between two release sheets. Both forms of the double release film are intended for use in a process generally similar to the process for assembling an electro-optic display from a front plane laminate already described, but involving two separate laminations; typically, in a first lamination the double release sheet is laminated to a front electrode to form a front sub-assembly, and then in a second lamination the front sub-assembly is laminated to a backplane to form the final display, although the order of these two laminations could be reversed if desired.

The subject matter presented herein, in particular, relates to piezo-electrophoretic films and display structural designs which do not need a power supply (e.g., battery or wired power supply, photovoltaic source, etc.,) in order for the electrophoretic display to operate. The assembly of such an electrophoretic display is therefore simplified. In some embodiments, the piezoelectric material and the electrophoretic media are directly laminated together. The electrophoretic medium may be contained in microcells, microcapsules, or the electrophoretic medium may be dispersed in a polymer matrix, as described above. In some embodiments the piezoelectric material is polarized (i.e., written) with a high-voltage electric field after the piezo-electrophoretic film or piezo-electrophoretic display has been created.

Piezoelectricity is the charge which accumulates in a solid material in response to applied mechanical stress. Suitable materials for the subject matter disclosed herein may include polyvinylidene fluoride (PVDF), quartz (SiO₂), berlinite (AlPO₄), gallium orthophosphate (GaPO₄), tourmaline, barium titanate (BaTiO₃), lead zirconate titanate (PZT), zinc oxide (ZnO), aluminum nitride (AlN), lithium tantalite, lanthanum gallium silicate, potassium sodium tartrate and any other known piezo materials.

Piezo-electrophoretic films and piezo-electrophoretic displays described herein use piezoelectricity to drive the charged pigments of an electrophoretic medium. Thus, when the piezoelectric material coupled to an electrophoretic media layer is manipulated or stressed (e.g., flexed, bent), the color of the electrophoretic material at the viewing surface changes. For example, by bending or introducing mechanical stress to a piece of piezo material, voltage may be generated and this voltage can be utilized to cause movement of the color pigments of the electrophoretic material.

While many piezoelectric materials are crystalline, a number of flexible piezoactive polymers are known, such as polyvinylidene fluoride (PVDF) and its copolymers, polyamides, and parylene-C. Non-crystalline polymers, such as polyimide and polyvinylidene chloride (PVDC), fall under amorphous bulk polymers. The standard procedure to make piezo active films, such as polyvinylidene fluoride (PVDF), is to create the polymer film and stretch it to create stress and align the dipoles. Stretching transforms unpolarized alpha phase regions of PVDF to polarized beta phase. A subsequent stimulus is added to pole regions of beta phase, for example, using strong electric fields. Other methods of aligning beta phases have been described in the literature, such as laser irradiation and intense magnetic fields. See, e.g., U.S. Patent No. 9,831,417.

A thin film of piezoelectric material, such as PVDF can be melted and spin-coated on a substrate to form a thin film. The thin film may optionally be thermally-conditioned or stretched prior to poling. Suitable bulk PVDF is available from, e.g., Sigma-Aldrich as a bulk powder or as a film. Pre-stretched piezoactive PVDF films are also available from, e.g., PolyK Technologies (State College, PA). Such films may also be procured with metalized electrode coatings on one side, which may also be used for piezo-electrophoretic films and displays, however poling piezo-electrophoretic with backing metal layers using electric fields is difficult. Co-polymers of PVDF, such as polyvinylidene fluoride-trifluoroethylene (PVDF-TrFE) are also available from both Sigma-Aldrich and PolyK. In some embodiments, thin films of PVDF and PVDF co-polymers can be produced by preparing a concentrated solution of bulk PVDF in a compatible, volatile solvent, such as dimethylformamide (DMF) and slot-coating the concentrated solution on a suitable transfer substrate or release, e.g., using a roll-to-roll process. The PVDF-coated substrate is then heated to drive off the DMF, resulting in a thin film (e.g., less than 20 µm, e.g., less than 10 µm, less than 5 µm) of PVDF. By carefully controlling the thermal cycles, the resulting film can be pre-conditioned to have larger numbers of beta phase domains, suitable for poling.

The electrophoretic microcells discussed herein are typically formed from a polymer, such as acrylates, vinyl ethers, or epoxides, as described in detail in, for example, U.S. Patent Nos. 6,930,818, 7,052,571, 7,616,374, 8,361,356, and 8,830,561. In some embodiments, the layer of electrophoretic microcells can be filled with an electrophoretic medium including two or more electrophoretic particles, which typically have different electrophoretic mobilities and optical properties. The electrophoretic medium may be sealed with a sealing layer 430, preferably a water-soluble sealing layer as described in U.S. Patent Nos. 7,560,004, 7,572,491, 9,759,978, or 10,087,344. In some embodiments, the layer of electrophoretic microcells is created on a release, filled with electrophoretic medium and sealed with sealing layer, and then the filled and sealed electrophoretic microcells are used as the substrate for the creation of the thin film of piezoelectric material. The resulting structure is a thin piezo-electrophoretic film.

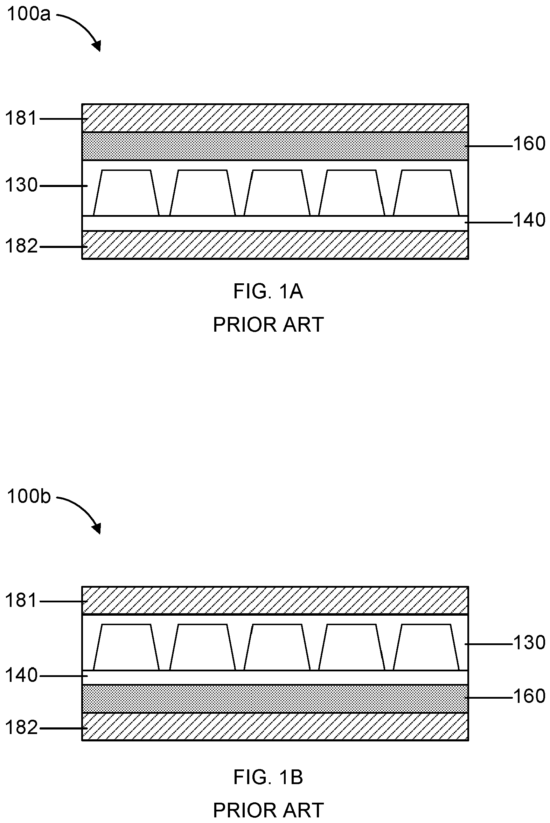

FIG. 1A is a schematic cross sectional view of an exemplary conventional piezo-electrophoretic display 100a. As shown in FIG. 1A, the piezo-electrophoretic display 100a includes a layered stack of components including a first electrode layer (e.g., electrode 181), a layer of piezoelectric material (e.g., piezoelectric layer 160), a layer of electrophoretic media (e.g., electrophoretic layer 130), a sealing layer (e.g., sealing layer 140), and a second electrode layer (e.g., electrode 182).

The electrode layer electrode 181 and electrode layer 182 can be light-transmissive, and can also be flexible. Suitable materials include commercial ITO-coated PET, which may be used as a substrate for manufacturing the electrode layer. In some embodiments, flexible and transparent conductive coatings including other transparent conductive oxides (TCOs) may be used, such as, zinc oxide, zinc tin oxide, indium zinc oxide, aluminum zinc oxide, indium tin zirconium oxide, indium gallium oxide, indium gallium zinc oxide, or fluorinated variants of these oxides such as fluorine-doped tin oxide. In some embodiments, poly(3,4-ethylenedioxythiophene) polystyrene sulfonate (PEDOT:PSS) is used because it has excellent bending properties and is optically transparent. While the overall conductivity is not as high as, e.g., PET/ITO, PEDOT:PSS is sufficient to provide the necessary electric field to drive the electrophoretic particles in the electrophoretic medium of the electrophoretic layer 130.

Other materials include polymers, typically light-transmissive polymers, that are doped with conductive materials such as carbon black, metal flakes, metal whiskers, carbon nanotubes, silicon nitride nanotubes, or graphene. In some instances, one or both of the electrode 181 and the electrode 182 are a metal film, such as a copper, silver, gold, or aluminum film or foil. Metal-coated polymer films may also be suitable for use as an electrode layer. The resistivity of the electrode layers may be at 500 ohm-m or less, e.g., 100 ohm-m or less, e.g., 1 ohm-m or less, e.g., 0.1 ohm-m or less, e.g., 0.01 ohm-m or less. (For comparison the electrophoretic medium layer typically has a resistivity of approximately 10⁷ to 10⁸ ohm-m, and the piezoelectric material has a resistivity of 10¹¹ to 10¹⁴ ohm-m.)

The piezoelectric material making up the piezoelectric layer 160 can be any of the materials listed above, however, polymers such as PVDF and its copolymers are preferred because they can be fabricated into very thin films. The electrophoretic media of the electrophoretic layer 130 typically includes one or more sets of charged particles that move through a non-polar solvent in the presence of an electric field. The electrophoretic media shown in FIG. 1A comprises microcells. However, the electrophoretic media can be contained in other structures such as in microcapsules, or dispersed droplets. The electrophoretic media can also be contained in open troughs or wells which are sealed in a larger flexible container.

The sealing layer 140 of the microcells in the electrophoretic layer 130 can be coated with an electrically-conductive material such as PEDOT or one of the materials discussed above to form the electrode 182.

The sealing layer 140 can be a water-soluble sealing layer that is applied to the open microcell structures of the electrophoretic layer 130 subsequent to being filled with the desired electrophoretic medium. The sealing layer 140 can be made conductive with the inclusion of conductive species. The sealing layer 140 is typically light-transmissive or transparent.

Although not shown in FIG. 1A, a piezo-electrophoretic display will often include at least one adhesive layer to adhere individual layers to one another when they are not formed directly on one another. As one example, ITO can be sputtered directly onto the piezoelectric layer 160 to form electrode 181. The adhesives used can be formed from a polymer such as an acrylic or a polyurethane. In some embodiments, the at least one adhesive layer is formed from polyurethanes, polyureas, polycarbonates, polyamides, polyesters, polycaprolactones, polyvinyl alcohol, polyethers, polyvinyl acetate derivatives such as poly(ethylene-co-vinylacetate), polyvinyl fluoride, polyvinylidene fluoride, polyvinyl butyral, polyvinylpyrrolidone, poly(2-ethyl-2-oxazoline), acrylic or methacrylic copolymers, maleic anhydride copolymers, vinyl ether copolymers, styrene copolymers, diene copolymers, siloxane copolymers, cellulose derivatives, gum Arabic, alginate, lecithin, polymers derived from amino acids, or the like. The adhesives may additionally include one or more low dielectric polymers or oligomers, ionic liquids, or conductive fillers such as carbon black, metal flakes, metal whiskers, carbon nanotubes, silicon nitride nanotubes, or graphene. Adhesives including such charged and/or conducting materials are conductive adhesives. The polymers and oligomers used in the adhesive layer may have functional group(s) for chain extension or crosslinking during or after lamination. The adhesive layer may have a resistivity value of roughly 10⁶ ohm*cm to 10⁸ ohm*cm, preferably less than 10¹² ohm*cm.

Among the polymers and oligomers mentioned above, polyurethanes, polyureas, polycarbonates, polyesters and polyamides, especially those comprising a functional group, are particularly preferred because of their superior adhesion and optical properties and high environmental resistance. Examples for the functional groups may include, but are not limited to, -OH, -SH, -NCO, -NCS, -NHR, -NRCONHR, -NRCSNHR, vinyl or epoxide and derivatives thereof, including cyclic derivatives. The "R" in the functional groups mentioned above may be hydrogen or alkyl, aryl, alkylaryl or arylalkyl of up to 20 carbon atoms which alkyl, aryl, alkylaryl or arylalkyl may be optionally substituted or interrupted by N, S, O or a halogen. The "R" preferably is hydrogen, methyl, ethyl, phenyl, hydroxymethyl, hydroxyethyl, hydroxybutyl or the like. Functionalized polyurethanes, such as hydroxyl terminated polyester polyurethanes or polyether polyurethanes, isocyanate terminated polyester polyurethanes or polyether polyurethanes or acrylate terminated polyester polyurethanes or polyether polyurethanes are particularly preferred.

In some embodiments, a piezo-electrophoretic film or display includes a release sheet (not shown in FIG. 1A). The release may be used temporarily to facilitate processing a piezo-electrophoretic film or display, e.g., when embossing, filling, cutting, etc. In other embodiments the release may be used to deliver a final piezo-electrophoretic film or display that will be adhered to a final product. In some instances, the release will protect a functional adhesive layer that will be used to manipulate the piezo-electrophoretic film or display prior to the piezo-electrophoretic film or display being disposed in or on a final product. The release may be formed from a material selected from the group consisting of polyethylene terephthalate (PET), polycarbonate, polyethylene (PE), polypropylene (PP), paper and a laminated or cladding film thereof. The release may also be metalized to facilitate quality control measurements and/or to control static electricity during handling, shipping, and downstream incorporation into products. In some embodiments, a silicone release coating may be applied onto the release to improve the release properties.

While not shown in FIG. 1A, a piezo-electrophoretic display may also include an additional edge seal and/or barrier material to allow the piezo-electrophoretic display to maintain the desired humidity level internally and to prevent leakage of e.g., non-polar solvent or adhesive, and to prevent ingress of water, dirt, or gasses. The barrier materials can be any flexible material, typically a polymer with low to negligible WVTR (water vapor transmission rate). Suitable materials include polyethylene terephthalate, polyethylene naphthalate, polycarbonate, polyimides, cyclic olefins, and combinations thereof. If the piezo-electrophoretic film or a piezo-electrophoretic display will be exposed to particularly harsh conditions, a flexible glass such as WILLOW^{®} glass (Corning, Inc.) may be used for the barrier layer. The edge seal can be a metallized foil or other barrier foil adhered over the edge of the piezo-electrophoretic film or a piezo-electrophoretic display. The edge seal may also be formed from dispensed sealants (thermal, chemical, and/or radiation cured), polyisobutylene or acrylate-based sealants, which may be cross-linked. In some embodiments, the edge seal may be a sputtered ceramic, such as alumina or indium tin oxide (ITO), or advanced ceramics such as available from Vitex Systems, Inc. (San Jose, CA).

FIG. 1B is a schematic cross sectional view of another exemplary conventional piezo-electrophoretic display 100b. The piezo-electrophoretic display 100b is closely-related to the piezo-electrophoretic display 100a of FIG. 1A, but has an alternative stack-up of layered components.

As shown in FIG. 1B, the piezo-electrophoretic display 100b includes a first electrode layer (e.g., electrode 181), a layer of electrophoretic media (e.g., electrophoretic layer 130), a sealing layer (e.g., sealing layer 140), a layer of piezoelectric material (e.g., piezoelectric layer 160), and a second electrode layer (e.g., electrode 182).

Of course, it is also possible to fabricate a piezo-electrophoretic display using other arrangements for the stack-up of layered components. For example, a piezo-electrophoretic display similar to piezo-electrophoretic display 100a can be constructed such that the openings of the microcells of the electrophoretic layer 130 instead face toward the piezoelectric layer 160. As a further alternative, a piezo-electrophoretic display similar to piezo-electrophoretic display 100b can be constructed such that the openings of the microcells of the electrophoretic layer 130 instead face away the piezoelectric layer 160. Finally, as indicated above, piezo-electrophoretic displays can be constructed using electrophoretic media other than microcells, such as microcapsules.

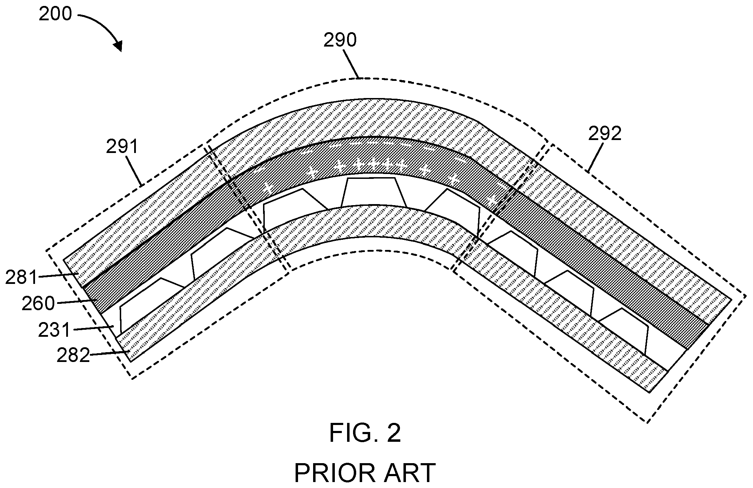

FIG. 2 is a schematic cross sectional view of an exemplary conventional piezo-electrophoretic display 200 upon application of mechanical stress. Piezo-electrophoretic display 200 has a similar stack-up of layers to piezo-electrophoretic display 100a (FIG. 1A), and includes a first electrode layer (e.g., electrode 281), a layer of piezoelectric material (e.g., piezoelectric layer 260), a layer of electrophoretic media and a sealing layer (depicted in FIG. 2 together as microcell layer 231), and a second electrode layer (e.g., electrode 282).

As depicted in FIG. 2, a mechanical stress is being applied to the piezo-electrophoretic display 200. In particular, a bending force is applied to the middle portion of piezo-electrophoretic display 200, denoted by portion 290 in FIG. 2. The left portion of the piezo-electrophoretic display 200, denoted by portion 291, and the right portion of the piezo-electrophoretic display 200, denoted by portion 292, are not subject to the mechanical stress and remain unbent.

The force applied to the piezoelectric layer 260 causes a charge separation to occur within the piezoelectric material. As denoted by the "+" and "-" symbols, electrical charges have been generated in portion 290 of the piezoelectric layer 260 in response to the bending force. Because the piezoelectric material produces an electric charge that is proportional to the magnitude of the mechanical stress applied per unit area, a higher concentration of charge is generated near the middle of portion 290, and a more dispersed amount of charge is generated toward the edges of portion 290 adjacent to portions 291 and 292.

The stack-up of the layers of the piezo-electrophoretic display 200 provides a conductive path between electrodes 281 and 282 for charge generated by the piezoelectric layer 260 to flow. Accordingly, a voltage can be generated across the layers of the piezo-electrophoretic display 200, and a resulting electric field formed between electrodes 281 and 282 passes through the microcell layer 231 causing the charged pigment particles within the microcells to move according to their charge polarity. This can be used to create a security ribbon having an image that remains in a neutral or hidden state when no mechanical stress is applied to the display, but which displays a security seal or image when the security ribbon is flexed and the charged ink particles move in the flexed or stressed portion.

Due to the higher concentration of charges near the middle of portion 290 discussed above, the microcells in the middle of portion 290 may experience a stronger electric field. Therefore, the charged pigment particles within those middle microcells may move further and/or faster than the charged pigment particles positioned at or near the edges of portion 290 adjacent to portions 291 and 292. Further, because the layers of the electrophoretic display are all continuous layers of material, some amount of charge generated in portion 290 flows through portions 291 and 292, potentially causing some movement of the charged pigment particles in those sections. For example, if a mechanical stress is applied to an area or portion of the piezoelectric layer 260 that is larger than the portion that includes a security seal or image, the piezoelectric material in the portion outside the security seal or image will generate charge that will cause the charged pigments in proximity to those portions to move.

The effects described above can cause a gradient of transition of the charged pigment particles within microcell layer 231. For example, the image revealed by bending a portion of the piezo-electrophoretic display 200 may not have sharp edges due to the charges spilling or spreading sidewise into unbent portions of the piezo-electrophoretic display 200. These effects are similar to the blooming or crosstalk artifacts observed in electrophoretic displays having an actively-driven array of pixels.

The lower contrast provided by piezo-electrophoretic displays such as the conventional displays described above may not be acceptable or desirable for some applications. For example, certain anti-counterfeit applications require displays capable of displaying images with sharp edges so there is no ambiguity about the fidelity of the image displayed by the security ribbon.

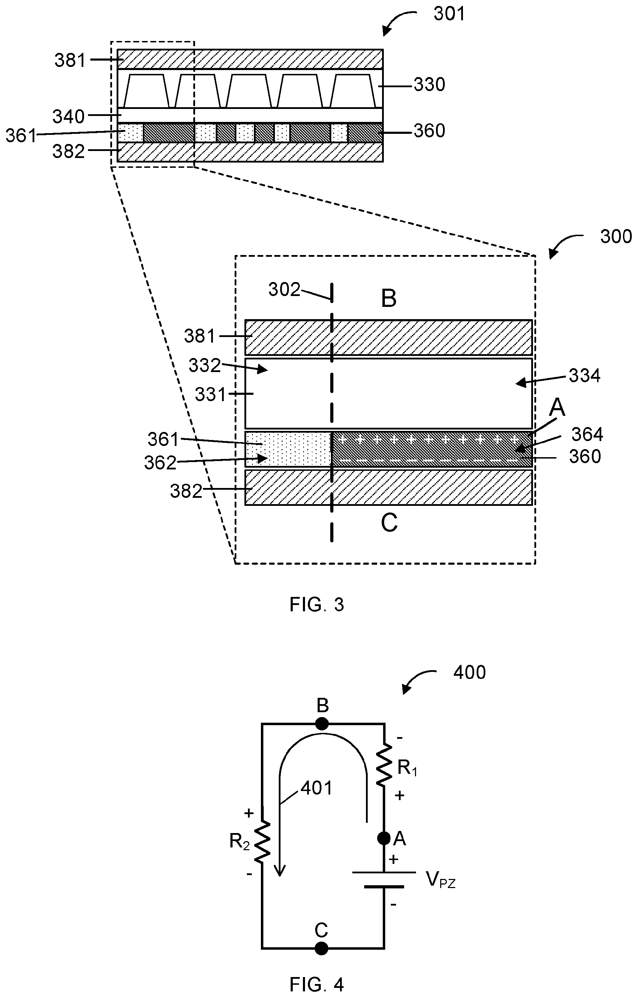

FIG. 3 shows an enlarged view 300 of a partial cross section of a piezo-electrophoretic display 301 in accordance with the subject matter disclosed herein. The stack-up of piezo-electrophoretic display 301 is similar to piezo-electrophoretic display 100b shown in FIG. 1B. However, for the purpose of describing the features of the display, only a subset of the layers of the piezo-electrophoretic display 301 are shown: the electrode 381, the piezoelectric layer 360, a layer of electrophoretic media (e.g., microcells 330), the sealing layer 340, and the second electrode 382. In the enlarged view 300, the layer of electrophoretic media and the sealing layer 340 are represented by electrophoretic layer 331.

Instead of being a continuous layer or film of piezoelectric material, the piezoelectric layer 360 of the piezo-electrophoretic display 301 is interspersed with an electrically insulating material 361. The electrically insulating material 361 has a resistivity that prevents the charges generated by any adjacent piezo-electrophoretic material from rapidly dissipating across the layers of the piezo-electrophoretic display 301. In some embodiments, the electrically insulating material 361 has a resistivity of approximately 10⁸ ohm*cm. In some embodiments, the electrically insulating material 361 has a resistivity between approximately 10² ohm*cm to 10¹⁴ ohm*cm. The electrically insulating material 361 can act as a true insulator, but can also act as a dielectric depending on the materials used.

The electrically insulating material 361 can be formed from, for example, a silicone resin, an epoxy resin, or an acrylic resin. In some embodiments, the electrically insulating material 361 is an insulating polymer material including polymethylmethacrylate as a main component. In some embodiments, the electrically insulating material 361 is made of polycarbonate, polyester, polystyrene, polyimide, epoxy, polyisocyanate, polyamide, polyvinyl alcohol, polybutadiene, polymethyl methacrylate, copolymer nylon, ultraviolet curing acrylic resin, fluorine resin, or the like.

In some embodiments, the electrically insulating material 361 is formed from unpoled portions of the piezoelectric material of the piezoelectric layer 360. In some embodiments, the electrically insulating material 361 is formed from the same material as the piezoelectric material (e.g., polyvinylidene fluoride or "PVDF") of the piezoelectric layer 360, but the portions that are the electrically insulating material 361 are α-phase having chains of zero dipole moments and are therefore substantially non-piezoelectric, while the charge-generating portions of the piezoelectric material are β-phase and have significant piezoelectric properties.

In some embodiments, the electrically insulating material 361 is formed from a piezoelectric material that is thicker that the charge-generating piezoelectric material of the piezoelectric layer 360. In this case, the two piezoelectric materials will generate charge differently depending on their thicknesses.

As shown in FIG. 3, the piezoelectric layer 360 can be alternately patterned with the electrically insulating material 361. This enables images, shapes, and/or text to be embedded into the piezo-electrophoretic display 301. This can also increase the contrast ratio of the piezo-electrophoretic display 301 because a different potential is created in proximity to the charge-generating portions of the piezoelectric material than in proximity to the electrically insulating material 361.

The enlarged view 300 includes one portion of the electrically insulating material 361 (denoted as insulating portion 362) and one portion of charge-generating piezoelectric material of the piezoelectric layer 360 (denoted as charge-generating piezoelectric material 364). A first portion 332 of the electrophoretic layer 331 is positioned above insulating portion 362, and a second portion 334 is positioned above the charge-generating piezoelectric material 364, as delineated by dashed line 302. The first portion 332 and second portion 334 each have an electrical resistance that is based on the volume of the electrophoretic layer 331 they encompass. Further, the insulating portion 362 also has an electrical resistance that is based on the volume and properties of the electrically insulating material 361 it encompasses. As denoted by the "+" and "-" symbols, a voltage has been generated in the charge-generating piezoelectric material 364 of the piezoelectric layer 360, for example, in response to bending or mechanical stress to the piezoelectric material.

FIG. 4 illustrates an exemplary equivalent circuit 400 of the enlarged cross section shown in FIG. 3. The three nodes or points, 'A' at the charge-generating piezoelectric material 364, 'B' at the electrode 381, and 'C' at the electrode 382, shown in FIG. 3 correspond to the same points shown in equivalent circuit 400 of FIG. 4. Resistance R₁ corresponds to the sum of the electrical resistances of the first portion 332 of the electrophoretic layer 331 and the insulating portion 362 of the piezoelectric layer 360. Resistance R₂ corresponds to the electrical resistances of the second portion 334 of the electrophoretic layer 331.

The charge-generating piezoelectric material 364 of the piezoelectric layer 360 is represented as a battery, and voltage V_{PZ} is the voltage generated by the charge-generating piezoelectric material 364 across points A and C. Resistance R₁ and Resistance R₂ are represented in series because the presence of a voltage source beneath a portion of the electrophoretic layer 331 effectively divides the layer into separate sections (as delineated by dashed line 302) having different electrical properties. For example, when voltage V_{PZ} has been generated, the voltage potential at point A is higher than at points B or C. Using a conventional current flow paradigm, current 401 flows from point A through resistance R₁ to point B, and from point B through resistance R₂ to point C. It follows that the voltage generated across resistance R₁ is opposite in polarity to the voltage generated across resistance R₂. In effect, two opposite voltages are created in series across separate portions of the electrophoretic layer.

Accordingly, fabricating the piezo-electrophoretic display 300 as described with the piezoelectric layer 360 alternately patterned with the electrically insulating material 361 provides advantages over conventional piezo-electrophoretic displays. For example, the electrically insulating material 361 can prevent substantial flow of charge within its proximity, thereby generating less voltage potential across the piezo-electrophoretic display 300. This can improve the sharpness of the lines and shape edges the piezo-electrophoretic display 300 can produce. Further, the differences in potential generated in proximity to the insulating portion 362 and the charge-generating piezoelectric material 364 of the piezoelectric layer 360 advantageously provides an improved means to drive the oppositely-charged pigment particles in the electrophoretic medium in opposite directions from one another in the absence of a matrix of individually-addressable pixel electrodes. Therefore, piezo-electrophoretic displays can be made thin enough for use in applications requiring them to be durable and substantially unnoticeable when incorporated into thin, low-profile final products such as paper or bank notes while still providing a high contrast ratio between the insulating portion 362 and the charge-generating piezoelectric material 364 of the piezoelectric layer 360 due to the effects described above.

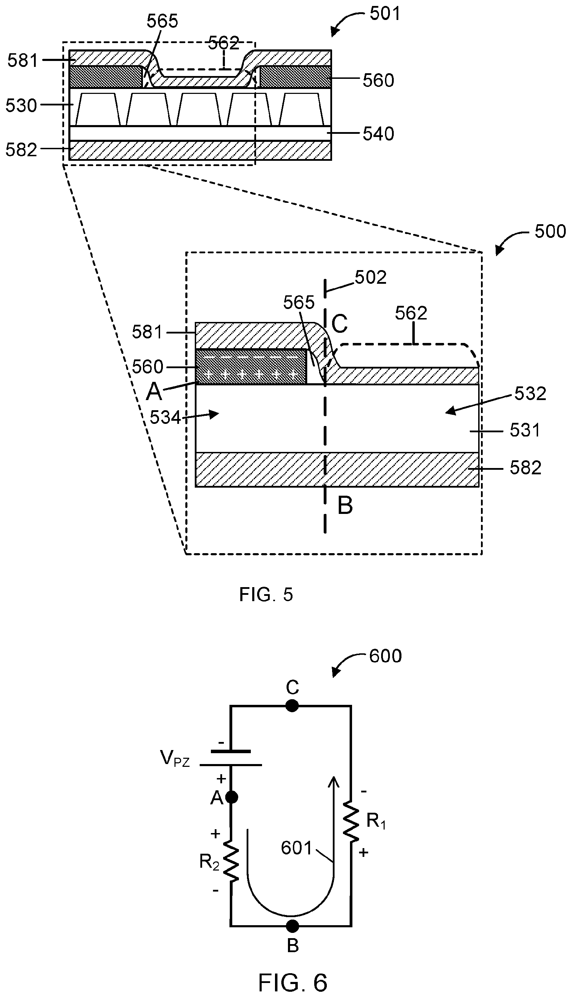

FIG. 5 shows an enlarged view 500 of a partial cross section of a piezo-electrophoretic display 501 in accordance with the subject matter disclosed herein. The stack-up of piezo-electrophoretic display 501 is similar to piezo-electrophoretic display 100a shown in FIG. 1A. However, for the purpose of describing the features of the display, only a subset of the layers of the piezo-electrophoretic display 501 are shown: the first electrode 581, the piezoelectric layer 560, a layer of electrophoretic media (e.g., microcells 530), the sealing layer 540, and the second electrode 582. In the enlarged view 500, the layer of electrophoretic media and the sealing layer 540 are represented by electrophoretic layer 531.

Instead of being a continuous layer or film of piezoelectric material, the piezoelectric layer 560 of the piezo-electrophoretic display 501 is interspersed with one or more voids or cuts 562 where the piezoelectric material has been cut away or otherwise removed. In some embodiments, instead of removing material from the piezoelectric layer 560, the piezoelectric layer 560 is selectively deposited onto microcells 530 such that gaps are left between portions of piezoelectric material where cuts 562 are shown. Deposition of the piezoelectric material can be performed using one of many processes known in the art.

As shown in FIG. 5, when the electrode 581 is laminated over the piezoelectric layer 560, some portions of the electrode 581 contacts the piezoelectric material of the piezoelectric layer 560, and other portions contact the microcells 530. Depending on the thickness of the piezoelectric material, an air bubble or air gap 565 can form at the edges of the piezoelectric material wherever the conductive material of the electrode 581 transitions from surfaces at different heights. Using a thinner piezoelectric material can prevent such air gaps 565 from forming.

Similar to the embodiment shown in FIG. 3, the piezoelectric layer 560 can be alternately patterned with several voids or cuts 562. This enables images, shapes, and/or text to be embedded into the piezo-electrophoretic display 501. This can also increase the contrast ratio of the piezo-electrophoretic display 501 because a different potential is created in proximity to the piezoelectric material than in proximity to the cuts 562, as discussed below.

The enlarged view 500 includes one portion of the piezoelectric material of the piezoelectric layer 560, and one cut 562. A first portion 532 of the electrophoretic layer 331 is positioned below the cut 562, and a second portion 534 is positioned below the piezoelectric material of the piezoelectric layer 560, as delineated by dashed line 502. The first portion 532 and second portion 534 each have an electrical resistance that is based on the volume of the electrophoretic layer 531 they encompass. In this embodiment, there is no other resistance as the cut 562 removed any material the piezoelectric layer 560. As denoted by the "+" and "-" symbols, a voltage has been generated in the piezoelectric material of the piezoelectric layer 360, for example, in response to bending or mechanical stress to the piezoelectric material.

FIG. 6 illustrates an exemplary equivalent circuit 600 of the enlarged cross section shown in FIG. 5. The three nodes or points, 'A' at the piezoelectric layer 560, 'B' at the electrode 582, and 'C' at the electrode 581, shown in FIG. 5 correspond to the same points shown in equivalent circuit 600 of FIG. 6. Resistance R₁ corresponds to the electrical resistances of the first portion 532 of the electrophoretic layer 531. Resistance R₂ corresponds to the electrical resistances of the second portion 534 of the electrophoretic layer 531.

The piezoelectric layer 560 is represented as a battery, and voltage V_{PZ} is the voltage generated by the charge-generating piezoelectric material across points A and C. Resistance R₁ and Resistance R₂ are represented in series because the presence of a voltage source beneath a portion of the electrophoretic layer 531 effectively divides the layer into separate sections (as delineated by dashed line 502) having different electrical properties. For example, when voltage V_{PZ} has been generated, the voltage potential at point A is higher than at points B or C. Using a conventional current flow paradigm, current 601 flows from point A through resistance R₂ to point B, and from point B through resistance R₁ to point C. It follows that the voltage generated across resistance R₁ is opposite in polarity to the voltage generated across resistance R₂. In effect, two opposite voltages are created in series across separate portions of the electrophoretic layer 531.

Accordingly, fabricating the piezo-electrophoretic display 500 as described with the piezoelectric layer 560 alternately patterned with one or more cuts 562 provides advantages over conventional piezo-electrophoretic displays. For example, the differences in potential generated in proximity to the cut 562 and the charge-generating piezoelectric material of the piezoelectric layer 360 advantageously provides an improved means to drive the oppositely-charged pigment particles in the electrophoretic medium in opposite directions from one another in the absence of a matrix of individually-addressable pixel electrodes. Therefore, piezo-electrophoretic displays can be made thin enough for use in applications requiring them to be durable and substantially unnoticeable when incorporated into thin, low-profile final products such as paper or bank notes while still providing a high contrast ratio and improving the sharpness of the lines and shape edges the piezo-electrophoretic display 500 can produce due to the effects described above.

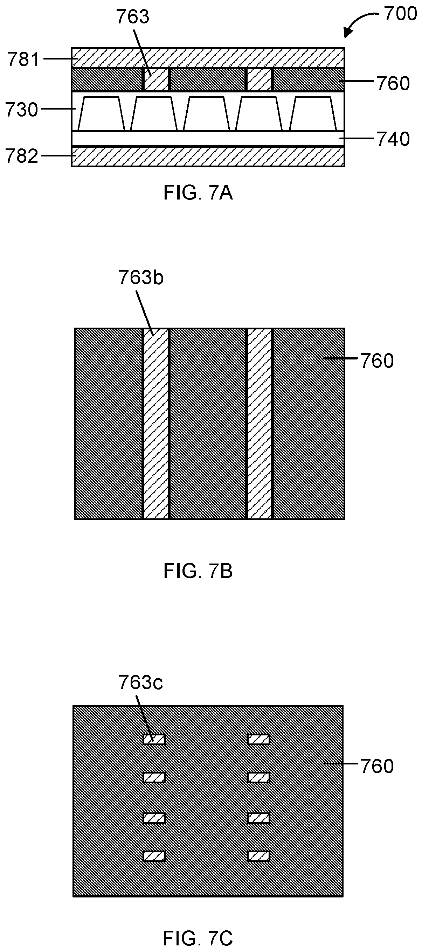

FIG. 7A shows a cross section of a piezo-electrophoretic display 700 in accordance with the subject matter disclosed herein. The stack-up of piezo-electrophoretic display 700 is similar to piezo-electrophoretic display 100a shown in FIG. 1A and includes the first electrode 781, the piezoelectric layer 760, a layer of electrophoretic media (e.g., microcells 730), the sealing layer 740, and the second electrode 782.

Instead of being a continuous layer or film of piezoelectric material, the piezoelectric layer 760 of the piezo-electrophoretic display 700 is interspersed with one or more cuts 763 where the piezoelectric material has been cut away or otherwise removed. This embodiment is similar to piezo-electrophoretic display 501 shown in FIG. 5, but the cuts 763 can be made to the piezoelectric layer 760 prior to when the piezoelectric layer 760 is laminated or otherwise adhered to microcells 730. For example, a film of piezoelectric material can be preprocessed to create one or more voids or cuts 763. The preprocessed film of piezoelectric material can then be laminated to microcells 730. Subsequently, the preprocessed film of piezoelectric material can be coated with a conductive material that both fills the cuts 763 and creates the electrode layer 781. Alternatively, the conductive material can be deposited on the preprocessed film of piezoelectric material on a release sheet prior to lamination to microcells 730.

An exemplary process for manufacturing piezo-electrophoretic display 700 is now described. As shown in FIG. 7A, piezo-electrophoretic display 700 includes a first electrode (e.g., first electrode 781) and a second electrode (e.g., second electrode 782). The method includes forming a layer of microcells (e.g., microcells 730), where the microcells have a bottom, walls, and a top opening. The method also includes filling the microcells with an electrophoretic medium through the top opening, and sealing off the top opening of the filled microcells with a water-soluble polymer to create a sealing layer (e.g., sealing layer 740). For example, as discussed above, the electrophoretic microcells can be formed from a polymer, such as acrylates, vinyl ethers, or epoxides.

In some embodiments, the layer of electrophoretic microcells can be filled with an electrophoretic medium including two or more electrophoretic particles, which typically have different electrophoretic mobilities and optical properties. For example, the electrophoretic medium can include a non-polar fluid and charged pigment particles that move toward or away from the piezoelectric layer (e.g., piezoelectric layer 760) when the piezoelectric layer is mechanically stressed. The electrophoretic medium may be sealed with the sealing layer (e.g., sealing layer 740), preferably a water-soluble sealing layer as described above. The non-polar fluid and charged pigment particles are sealed in the microcells with the sealing layer.

The second electrode can be bonded to the sealing layer. For example, the sealing layer of the microcells can be coated with an electrically-conductive material such as PEDOT or one of the materials discussed above. In some embodiments, the second electrode includes an electrically-conductive material coupled to a suitable substrate material, as described above.

Further, as described above, the method can include processing a film of piezoelectric material to form a piezoelectric layer (e.g., piezoelectric layer 760) including one or more voids in the piezoelectric material (e.g., voids or cuts 763). The method can then include bonding the piezoelectric layer with the layer of microcells on a surface opposite to the sealing layer. For example, a roll-to-roll process such as lamination can be used to bond the piezoelectric layer with the layer of microcells. In some embodiments, the piezoelectric layer can be coupled to the microcells with an adhesive layer (not shown in FIG. 7A).

The first electrode can be formed by depositing an electrically-conductive material onto the piezoelectric layer. The electrically-conductive material used to form the first electrode fills the one or more voids in the piezoelectric material and coats a surface of the piezoelectric layer. Accordingly, the electrically-conductive material of the first electrode that fills the one or more voids in the piezoelectric material is in contact with the layer of microcells since the voids are made all the way through the piezoelectric material.

The piezo-electrophoretic display can be bonded with a target object. For example, a piezo-electrophoretic display such as the one shown in FIG. 7A can be processed and affixed to a target object such as paper, a bank note, or currency. In some embodiments, a hot stamping process is used to bond the piezo-electrophoretic display with the target object. In some embodiments, the piezoelectric layer is polarized with an electric field. In some embodiments, the electric field is provided by a corona discharge.

As indicated above, an alternate method can be used to manufacture piezo-electrophoretic display 700 in which the piezoelectric layer is formed on a suitable release sheet, and is processed as described above to include one or more voids in the piezoelectric material. Further, the first electrode can be formed by depositing an electrically-conductive material onto the piezoelectric layer, and the electrically-conductive material fills the one or more voids in the piezoelectric material and coats a surface of the piezoelectric layer. In this alternative embodiment of the method, the release sheet is then removed from the piezoelectric layer, and the piezoelectric layer is bonded with the layer of microcells on a surface opposite to the sealing layer. In some embodiments, a roll-to-roll process is used to bond the piezoelectric layer with the layer of microcells.

FIG. 7B shows a top view of the piezo-electrophoretic display 700 with the electrode 781 not shown. In FIG. 7B, cuts 763b are formed as slits that run fully from one edge of the piezoelectric layer 760 to the opposite edge. FIG. 7C shows a top view of the piezo-electrophoretic display 700 with the electrode 781 not shown. In FIG. 7C, cuts 763c are formed as small holes or vias that can be dispersed throughout the piezoelectric layer 760.

Similar to the embodiment shown in FIG. 5, the piezoelectric layer 760 can be alternately patterned with several cuts 763. This enables images, shapes, and/or text to be embedded into the piezo-electrophoretic display 700. This can also increase the contrast ratio of the piezo-electrophoretic display 700 because a different potential is created in proximity to the piezoelectric material than in proximity to the cuts 763, as discussed below. The embodiment described in connection with FIGS. 7A-7C exhibits the same effects as the embodiment of FIG. 5, but can also prevent any issues that may occur such as small pores and the formation of air bubbles or air gaps due to the lamination process.

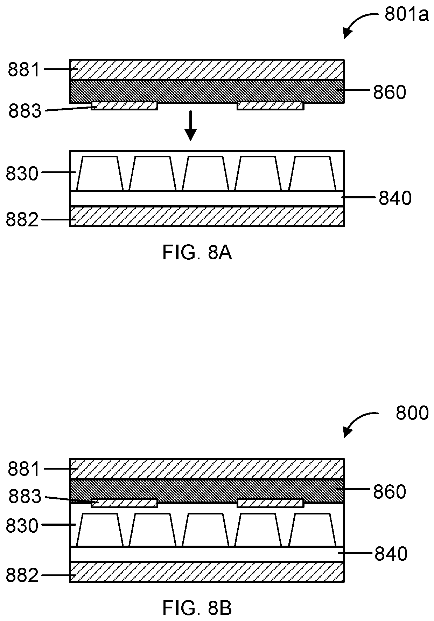

FIG. 8A shows cross section 801a of a piezo-electrophoretic display being formed in accordance with the subject matter disclosed herein. FIG. 8A shows a layer of electrophoretic media (e.g., microcells 830), a sealing layer 840, and a second electrode 882 joined together. FIG. 8A also shows a first electrode 881 applied to a piezoelectric layer 860. In this embodiment, conductive segments 883 have been formed on the surface of the piezoelectric layer 860 opposite the first electrode 881. For example, conductive segments 883 can be formed from a thin layer of a conductive material such as PEDOT. In some embodiments, conductive segments 883 are approximately 50-100nm in thickness.

As denoted by the arrow in FIG. 8A, the structure including the first electrode 881, the piezoelectric layer 860, and the conductive segments 883 is applied to the surface of microcells 830 to form the piezo-electrophoretic display 800 shown in FIG. 8B. For example, a roll-to-roll lamination process can be used to form the piezo-electrophoretic display 800.

An exemplary process for manufacturing piezo-electrophoretic display 800 is now described. The method includes bonding a first electrode (e.g., first electrode 881) with a piezoelectric layer (e.g., piezoelectric layer 860) comprising polyvinylidene fluoride (PVDF). For example, as described above, the first electrode can be formed of an electrically-conductive material that is deposited on a film of piezoelectric material. Next, one or more conductive segments (e.g., conductive segments 883) can be formed on a surface of the piezoelectric layer opposite to the first electrode, as described above. In some embodiments, the conductive segments are formed from a thin layer of a conductive material such as PEDOT, and have a thickness between approximately 50-100nm.

The method includes forming a layer of microcells (e.g., microcells 830), where the microcells have a bottom, walls, and a top opening. The method also includes filling the microcells with an electrophoretic medium through the top opening, and sealing off the top opening of the filled microcells with a water-soluble polymer to create a sealing layer (e.g., sealing layer 840). For example, as discussed above, the electrophoretic microcells can be formed from a polymer, such as acrylates, vinyl ethers, or epoxides.

In some embodiments, the layer of electrophoretic microcells can be filled with an electrophoretic medium including two or more electrophoretic particles, which typically have different electrophoretic mobilities and optical properties. For example, the electrophoretic medium can include a non-polar fluid and charged pigment particles that move toward or away from the piezoelectric layer (e.g., piezoelectric layer 860) when the piezoelectric layer is mechanically stressed. The electrophoretic medium may be sealed with the sealing layer (e.g., sealing layer 840), preferably a water-soluble sealing layer as described above. The non-polar fluid and charged pigment particles are sealed in the microcells with the sealing layer.

A second electrode (e.g., second electrode 882) can be bonded to the sealing layer. For example, the sealing layer of the microcells can be coated with an electrically-conductive material such as PEDOT or one of the other electrically-conductive materials discussed above. In some embodiments, the second electrode includes an electrically-conductive material coupled to a suitable substrate material, as described above. The method can then include bonding the piezoelectric layer with the layer of microcells on a surface opposite to the sealing layer. For example, a roll-to-roll process such as lamination can be used to bond the piezoelectric layer with the layer of microcells. In some embodiments, the piezoelectric layer can be coupled to the microcells with an adhesive layer (not shown in FIG. 8B).

Accordingly, bonding the piezoelectric layer having the conductive segments (e.g., conductive segments 883) with the layer of microcells places the conductive segments in contact with the layer of microcells. Advantageously, the conductive segments 883 in the piezo-electrophoretic display 800 exhibit the same effects as the piezo-electrophoretic displays 500 and 700 without requiring any cutting or post processing of the piezoelectric layer 860 once it is adhered to the microcells 830 (or alternatively, formed on a release sheet). For example, in response to charges generated by the piezoelectric material upon application of mechanical stress, the conductive segments 883 are driven to the same potential as the first electrode 881. Accordingly, the conductive segments 883 effectively act as a short circuit between the first electrode 881 and the surface of the microcells 830, thereby achieving the same beneficial effects as the piezo-electrophoretic displays 500 and 700. Further, the thickness of the conductive segments 883 is small enough to be on the level of roughness of the surface of the piezoelectric layer 860. Therefore, no special treatment or processing is required to fabricate the piezo-electrophoretic display 800.

The piezo-electrophoretic display can be bonded with a target object. For example, a piezo-electrophoretic display such as piezo-electrophoretic display 800 can be processed and affixed to a target object such as paper, a bank note, or currency. In some embodiments, a hot stamping process is used to bond the piezo-electrophoretic display with the target object. In some embodiments, the piezoelectric layer is polarized with an electric field. In some embodiments, the electric field is provided by a corona discharge.

One of ordinary skill in the art will appreciate that the processes recited herein is exemplary and not limiting. Other processes or other orders of the process steps can be used to manufacture a display having the structure and features of piezo-electrophoretic displays described herein.

It will be apparent to those skilled in the art that numerous changes and modifications can be made to the specific embodiments of the invention described above without departing from the scope of the invention.

## Claims

1. A method for making a piezo-electrophoretic display including a first electrode (581, 781, 881) and a second electrode (382, 582, 782, 882), the method comprising:
forming a layer of microcells (530, 830), wherein the microcells have a bottom, walls, and a top opening;
filling the microcells with an electrophoretic medium through the top opening;
sealing off the top opening of the filled microcells with a water-soluble polymer to create a sealing layer;
bonding the second electrode with the sealing layer (140, 340, 430, 540, 740, 840);
processing a film of piezoelectric material to form a piezoelectric layer (160, 260, 360, 560, 760, 860) comprising one or more voids (562, 763) in the piezoelectric material;
bonding the piezoelectric layer with the layer of microcells on a surface opposite to the sealing layer; and
forming the first electrode by depositing an electrically-conductive material onto the piezoelectric layer, wherein the electrically-conductive material fills the one or more voids in the piezoelectric material and coats a surface of the piezoelectric layer.

2. The method of claim 1 wherein the electrically-conductive material of the first electrode comprises poly(3,4-ethylenedioxythiophene) polystyrene sulfonate (PEDOT-PSS).

3. The method of claim 1 wherein the electrically-conductive material of the first electrode that fills the one or more voids in the piezoelectric material is in contact with the layer of microcells.

4. The method of claim 1 wherein the second electrode comprises an electrically-conductive material coupled to a substrate.

5. The method of claim 1 further comprising bonding the piezo-electrophoretic display to a target object comprising one of paper, a bank note, and a currency bill.

6. The method of claim 1 wherein the electrophoretic medium comprises a non-polar fluid and charged pigment particles that move toward or away from the piezoelectric layer when the piezoelectric layer is mechanically stressed, wherein the non-polar fluid and charged pigment particles are sealed in the microcells with the sealing layer.

7. The method of claim 1 wherein the piezoelectric layer is polarized with an electric field.

8. A method for making a piezo-electrophoretic display, the method comprising:
processing a film of piezoelectric material on a release film to form a piezoelectric layer (160, 260, 360, 560, 760, 860) comprising one or more voids (562, 763) in the piezoelectric material;
forming a first electrode (581, 781, 881) by depositing an electrically-conductive material onto the piezoelectric layer, wherein the electrically-conductive material fills the one or more voids in the piezoelectric material and coats a surface of the piezoelectric layer;
forming a layer of microcells (530, 830), wherein the microcells have a bottom, walls, and a top opening;
filling the microcells with an electrophoretic medium through the top opening;
sealing off the top opening of the filled microcells with a water-soluble polymer to create a sealing layer (140, 340, 430, 540, 740, 840);
bonding a second electrode (382, 582, 782, 882) with the sealing layer;
removing the release film from the piezoelectric layer; and
bonding the piezoelectric layer with the layer of microcells on a surface opposite to the sealing layer.

9. The method of claim 8 wherein the electrically-conductive material of the first electrode comprises poly(3,4-ethylenedioxythiophene) polystyrene sulfonate (PEDOT-PSS).

10. The method of claim 8 wherein the electrically-conductive material of the first electrode that fills the one or more voids in the piezoelectric material is in contact with the layer of microcells.

11. The method of claim 8 wherein the second electrode comprises an electrically-conductive material coupled to a substrate.

12. The method of claim 8 further comprising bonding the piezo-electrophoretic display to a target object comprising one of paper, a bank note, and a currency bill.

13. The method of claim 8 wherein the electrophoretic medium comprises a non-polar fluid and charged pigment particles that move toward or away from the piezoelectric layer when the piezoelectric layer is mechanically stressed, wherein the non-polar fluid and charged pigment particles are sealed in the microcells with the sealing layer.

14. The method of claim 8 wherein the piezoelectric layer is polarized with an electric field.

15. A method for making a piezo-electrophoretic display, the method comprising:
bonding a first electrode (581, 781, 881) with a piezoelectric layer (160, 260, 360, 560, 760, 860) comprising polyvinylidene fluoride (PVDF);
forming one or more conductive segments (883) on a surface of the piezoelectric layer opposite to the first electrode;
forming a layer of microcells (530, 830), wherein the microcells have a bottom, walls, and a top opening;
filling the microcells with an electrophoretic medium through the top opening;
sealing off the top opening of the filled microcells with a water-soluble polymer to create a sealing layer (140, 340, 430, 540, 740, 840);
bonding a second electrode (382, 582, 782, 882) with the sealing layer; and
bonding the piezoelectric layer and the one or more conductive segments with the layer of microcells on a surface opposite to the sealing layer.

16. The method of claim 15 wherein the electrically-conductive material of the first electrode comprises poly(3,4-ethylenedioxythiophene) polystyrene sulfonate (PEDOT-PSS).

17. The method of claim 15 wherein the second electrode comprises an electrically-conductive material coupled to a substrate.

18. The method of claim 15 further comprising bonding the piezo-electrophoretic display to a target object comprising one of paper, a bank note, and a currency bill.

19. The method of claim 15 wherein the piezoelectric layer is polarized with an electric field.

20. The method of claim 15 wherein the one or more conductive segments are approximately 50-100nm in thickness.

21. The method of claim 15 wherein the one or more conductive segments comprise poly(3,4-ethylenedioxythiophene) polystyrene sulfonate (PEDOT-PSS).

22. The method of claim 15 wherein the electrophoretic medium comprises a non-polar fluid and charged pigment particles that move toward or away from the piezoelectric layer when the piezoelectric layer is mechanically stressed, wherein the non-polar fluid and charged pigment particles are sealed in the microcells with the sealing layer.

## Patentansprüche

1. Verfahren zum Herstellen einer piezoelektrophoretischen Anzeige, die eine erste Elektrode (581, 781, 881) und eine zweite Elektrode (382, 582, 782, 882) beinhaltet, wobei das Verfahren umfasst:
Bilden einer Schicht aus Mikrozellen (530, 830), wobei die Mikrozellen eine Unterseite, Wände und eine obere Öffnung aufweisen;
Füllen der Mikrozellen mit einem elektrophoretischen Medium durch die obere Öffnung;
Abdichten der oberen Öffnung der gefüllten Mikrozellen mit einem wasserlöslichen Polymer, um eine Versiegelungsschicht zu erzeugen;
Bonden der zweiten Elektrode an die Versiegelungsschicht (140, 340, 430, 540, 740, 840);
Verarbeiten eines Films aus einem piezoelektrischen Material, um eine piezoelektrische Schicht (160, 260, 360, 560, 760, 860) zu bilden, die einen oder mehrere Hohlräume (562, 763) in dem piezoelektrischen Material umfasst;
Bonden der piezoelektrischen Schicht an die Schicht von Mikrozellen auf einer Oberfläche, die der Versiegelungsschicht gegenüberliegt; und
Bilden der ersten Elektrode, indem ein elektrisch leitfähiges Material auf die piezoelektrische Schicht abgeschieden wird, wobei das elektrisch leitfähige Material den einen oder die mehreren Hohlräume in dem piezoelektrischen Material ausfüllt und eine Oberfläche der piezoelektrischen Schicht beschichtet.

2. Verfahren nach Anspruch 1, wobei das elektrisch leitfähige Material der ersten Elektrode Poly(3,4-ethylendioxythiophen)-polystyrolsulfonat (PEDOT-PSS) umfasst.

3. Verfahren nach Anspruch 1, wobei das elektrisch leitfähige Material der ersten Elektrode, das den einen oder die mehreren Hohlräume in dem piezoelektrischen Material ausfüllt, in einem Kontakt mit der Schicht von Mikrozellen steht.

4. Verfahren nach Anspruch 1, wobei die zweite Elektrode ein elektrisch leitfähiges Material umfasst, das mit einem Substrat gekoppelt ist.

5. Verfahren nach Anspruch 1, das ferner ein Bonden der piezoelektrophoretischen Anzeige an ein Zielobjekt umfasst, das eines von Papier, einer Banknote und einem Geldschein umfasst.

6. Verfahren nach Anspruch 1, wobei das elektrophoretische Medium ein unpolares Fluid und geladene Pigmentpartikel umfasst, die sich in Richtung auf die piezoelektrische Schicht oder von dieser wegbewegen, wenn die piezoelektrische Schicht mechanisch belastet wird, wobei das unpolare Fluid und geladene Pigmentpartikel in den Mikrozellen mit der Versiegelungsschicht versiegelt werden.

7. Verfahren nach Anspruch 1, wobei die piezoelektrische Schicht mit einem elektrischen Feld polarisiert wird.

8. Verfahren zum Herstellen einer piezoelektrophoretischen Anzeige, wobei das Verfahren umfasst:
Verarbeiten eines Films aus einem piezoelektrischen Material auf einem Trennfilm, um eine piezoelektrische Schicht (160, 260, 360, 560, 760, 860) zu bilden, die einen oder mehrere Hohlräume (562, 763) in dem piezoelektrischen Material umfasst;
Bilden einer ersten Elektrode (581, 781, 881), indem ein elektrisch leitfähiges Material auf die piezoelektrische Schicht abgeschieden wird, wobei das elektrisch leitfähige Material den einen oder die mehreren Hohlräume in dem piezoelektrischen Material ausfüllt und eine Oberfläche der piezoelektrischen Schicht beschichtet.
Bilden einer Schicht aus Mikrozellen (530, 830), wobei die Mikrozellen eine Unterseite, Wände und eine obere Öffnung aufweisen;
Füllen der Mikrozellen mit einem elektrophoretischen Medium durch die obere Öffnung;
Abdichten der oberen Öffnung der gefüllten Mikrozellen mit einem wasserlöslichen Polymer, um eine Versiegelungsschicht (140, 340, 430, 540, 740, 840) zu erzeugen;
Bonden einer zweiten Elektrode (382, 582, 782, 882) an die Versiegelungsschicht;
Entfernen des Trennfilms von der piezoelektrischen Schicht; und
Bonden der piezoelektrischen Schicht an die Schicht von Mikrozellen auf einer Oberfläche, die der Versiegelungsschicht gegenüberliegt.

9. Verfahren nach Anspruch 8, wobei das elektrisch leitfähige Material der ersten Elektrode Poly(3,4-ethylendioxythiophen)-polystyrolsulfonat (PEDOT-PSS) umfasst.

10. Verfahren nach Anspruch 8, wobei das elektrisch leitfähige Material der ersten Elektrode, das den einen oder die mehreren Hohlräume in dem piezoelektrischen Material ausfüllt, in einem Kontakt mit der Schicht von Mikrozellen steht.

11. Verfahren nach Anspruch 8, wobei die zweite Elektrode ein elektrisch leitfähiges Material umfasst, das mit einem Substrat gekoppelt ist.

12. Verfahren nach Anspruch 8, das ferner ein Bonden der piezoelektrophoretischen Anzeige an ein Zielobjekt umfasst, das eines von Papier, einer Banknote und einem Geldschein umfasst.

13. Verfahren nach Anspruch 8, wobei das elektrophoretische Medium ein unpolares Fluid und geladene Pigmentpartikel umfasst, die sich in Richtung auf die piezoelektrische Schicht oder von dieser wegbewegen, wenn die piezoelektrische Schicht mechanisch belastet wird, wobei das unpolare Fluid und geladene Pigmentpartikel in den Mikrozellen mit der Versiegelungsschicht versiegelt werden.

14. Verfahren nach Anspruch 8, wobei die piezoelektrische Schicht mit einem elektrischen Feld polarisiert wird.

15. Verfahren zum Herstellen einer piezoelektrophoretischen Anzeige, wobei das Verfahren umfasst:
Bonden einer ersten Elektrode (581, 781, 881) an eine piezoelektrische Schicht (160, 260, 360, 560, 760, 860), die ein Polyvinylidenfluorid (PVDF) umfasst;
Bilden eines oder mehrerer leitfähiger Segmente (883) auf einer Oberfläche der piezoelektrischen Schicht, die der ersten Elektrode gegenüberliegt;
Bilden einer Schicht aus Mikrozellen (530, 830), wobei die Mikrozellen eine Unterseite, Wände und eine obere Öffnung aufweisen;
Füllen der Mikrozellen mit einem elektrophoretischen Medium durch die obere Öffnung;
Abdichten der oberen Öffnung der gefüllten Mikrozellen mit einem wasserlöslichen Polymer, um eine Versiegelungsschicht (140, 340, 430, 540, 740, 840) zu erzeugen;
Bonden einer zweiten Elektrode (382, 582, 782, 882) an die Versiegelungsschicht; und
Bonden der piezoelektrischen Schicht und des einen oder der mehreren leitfähigen Segmente an die Schicht von Mikrozellen auf einer Oberfläche, die der Versiegelungsschicht gegenüberliegt.

16. Verfahren nach Anspruch 15, wobei das elektrisch leitfähige Material der ersten Elektrode Poly(3,4-ethylendioxythiophen)-polystyrolsulfonat (PEDOT-PSS) umfasst.

17. Verfahren nach Anspruch 15, wobei die zweite Elektrode ein elektrisch leitfähiges Material umfasst, das mit einem Substrat gekoppelt ist.

18. Verfahren nach Anspruch 15, das ferner ein Bonden der piezoelektrophoretischen Anzeige an ein Zielobjekt umfasst, das eines von Papier, einer Banknote und einem Geldschein umfasst.

19. Verfahren nach Anspruch 15, wobei die piezoelektrische Schicht mit einem elektrischen Feld polarisiert wird.

20. Verfahren nach Anspruch 15, wobei das eine oder die mehreren leitfähigen Segmente eine Dicke von ungefähr 50 bis 100 nm aufweisen.

21. Verfahren nach Anspruch 15, wobei das eine oder die mehreren leitfähigen Segmente Poly(3,4-ethylendioxythiophen)-polystyrolsulfonat (PEDOT-PSS) umfassen.

22. Verfahren nach Anspruch 15, wobei das elektrophoretische Medium ein unpolares Fluid und geladene Pigmentpartikel umfasst, die sich in Richtung auf die piezoelektrische Schicht oder von dieser wegbewegen, wenn die piezoelektrische Schicht mechanisch belastet wird, wobei das unpolare Fluid und geladene Pigmentpartikel in den Mikrozellen mit der Versiegelungsschicht versiegelt werden.

## Revendications

1. Procédé de fabrication d'un affichage piézo-électrophorétique comportant une première électrode (581, 781, 881) et une seconde électrode (382, 582, 782, 882), le procédé comprenant :
la formation d'une couche de microcellules (530, 830), les microcellules ayant un fond, des parois, et une ouverture supérieure ;
le remplissage des microcellules avec un milieu électrophorétique par l'ouverture supérieure ;
le scellement de l'ouverture supérieure des microcellules remplies au moyen d'un polymère soluble dans l'eau pour créer une couche de scellement ;
le collage de la seconde électrode à la couche de scellement (140, 340, 430, 540, 740, 840) ;
le traitement d'un film de matériau piézoélectrique pour former une couche piézoélectrique (160, 260, 360, 560, 760, 860) comprenant un ou plusieurs vides (562, 763) dans le matériau piézoélectrique ;
le collage de la couche piézoélectrique à la couche de microcellules sur une surface opposée à la couche de scellement ; et
la formation de la première électrode par dépôt d'un matériau électriquement conducteur sur la couche piézoélectrique, dans lequel le matériau électriquement conducteur remplit le ou les vides du matériau piézoélectrique et revêt une surface de la couche piézoélectrique.

2. Procédé selon la revendication 1, dans lequel le matériau électriquement conducteur de la première électrode comprend du poly(3,4-éthylènedioxythiophène) polystyrène sulfonate (PEDOT-PSS).

3. Procédé selon la revendication 1, dans lequel le matériau électriquement conducteur de la première électrode qui remplit le ou les vides dans le matériau piézoélectrique est en contact avec la couche de microcellules.

4. Procédé selon la revendication 1, dans lequel la seconde électrode comprend un matériau électriquement conducteur couplé à un substrat.

5. Procédé selon la revendication 1, comprenant en outre le collage de l'affichage piézo-électrophorétique à un objet cible comprenant l'un parmi du papier, un billet de banque et une coupure de monnaie.

6. Procédé selon la revendication 1, dans lequel le milieu électrophorétique comprend un fluide non polaire et des particules de pigment chargées qui se rapprochent ou s'éloignent de la couche piézoélectrique lorsque la couche piézoélectrique est soumise à une contrainte mécanique, dans lequel le fluide non polaire et les particules de pigment chargées sont scellés dans les microcellules avec la couche de scellement.

7. Procédé selon la revendication 1, dans lequel la couche piézoélectrique est polarisée au moyen d'un champ électrique.

8. Procédé de fabrication d'un affichage piézo-électrophorétique, le procédé comprenant :
le traitement d'un film de matériau piézoélectrique sur un film pelable pour former une couche piézoélectrique (160, 260, 360, 560, 760, 860) comprenant un ou plusieurs vides (562, 763) dans le matériau piézoélectrique ;
la formation d'une première électrode (581, 781, 881) par dépôt d'un matériau électriquement conducteur sur la couche piézoélectrique, dans lequel le matériau électriquement conducteur remplit le ou les vides dans le matériau piézoélectrique et revêt une surface de la couche piézoélectrique ;
la formation d'une couche de microcellules (530, 830), les microcellules ayant un fond, des parois, et une ouverture supérieure ;
le remplissage des microcellules avec un milieu électrophorétique par l'ouverture supérieure ;
le scellement de l'ouverture supérieure des microcellules remplies au moyen d'un polymère soluble dans l'eau pour créer une couche de scellement (140, 340, 430, 540, 740, 840) ;
le collage d'une seconde électrode (382, 582, 782, 882) à la couche de scellement ;
le retrait du film pelable de la couche piézoélectrique ; et
le collage de la couche piézoélectrique à la couche de microcellules sur une surface opposée à la couche de scellement.

9. Procédé selon la revendication 8, dans lequel le matériau électriquement conducteur de la première électrode comprend du poly(3,4-éthylènedioxythiophène) polystyrène sulfonate (PEDOT-PSS).

10. Procédé selon la revendication 8, dans lequel le matériau électriquement conducteur de la première électrode qui remplit le ou les vides dans le matériau piézoélectrique est en contact avec la couche de microcellules.

11. Procédé selon la revendication 8, dans lequel la seconde électrode comprend un matériau électriquement conducteur couplé à un substrat.

12. Procédé selon la revendication 8, comprenant en outre le collage de l'affichage piézo-électrophorétique à un objet cible comprenant l'un parmi du papier, un billet de banque et une coupure de monnaie.

13. Procédé selon la revendication 8, dans lequel le milieu électrophorétique comprend un fluide non polaire et des particules de pigment chargées qui se rapprochent ou s'éloignent de la couche piézoélectrique lorsque la couche piézoélectrique est soumise à une contrainte mécanique, dans lequel le fluide non polaire et les particules de pigment chargées sont scellés dans les microcellules avec la couche de scellement.

14. Procédé selon la revendication 8, dans lequel la couche piézoélectrique est polarisée au moyen d'un champ électrique.

15. Procédé de fabrication d'un affichage piézo-électrophorétique, le procédé comprenant :
le collage d'une première électrode (581, 781, 881) à une couche piézoélectrique (160, 260, 360, 560, 760, 860) comprenant du polyfluorure de vinylidène (PVDF) ;
la formation d'un ou plusieurs segments conducteurs (883) sur une surface de la couche piézoélectrique opposée à la première électrode ;
la formation d'une couche de microcellules (530, 830), les microcellules ayant un fond, des parois, et une ouverture supérieure ;
le remplissage des microcellules avec un milieu électrophorétique par l'ouverture supérieure ;
le scellement de l'ouverture supérieure des microcellules remplies au moyen d'un polymère soluble dans l'eau pour créer une couche de scellement (140, 340, 430, 540, 740, 840) ;
le collage d'une seconde électrode (382, 582, 782, 882) à la couche de scellement ; et
le collage de la couche piézoélectrique et du ou des segments conducteurs à la couche de microcellules sur une surface opposée à la couche de scellement.

16. Procédé selon la revendication 15, dans lequel le matériau électriquement conducteur de la première électrode comprend du poly(3,4-éthylènedioxythiophène) polystyrène sulfonate (PEDOT-PSS).

17. Procédé selon la revendication 15, dans lequel la seconde électrode comprend un matériau électriquement conducteur couplé à un substrat.

18. Procédé selon la revendication 15, comprenant en outre le collage de l'affichage piézo-électrophorétique à un objet cible comprenant l'un parmi du papier, un billet de banque et une coupure de monnaie.

19. Procédé selon la revendication 15, dans lequel la couche piézoélectrique est polarisée au moyen d'un champ électrique.

20. Procédé selon la revendication 15, dans lequel le ou les segments conducteurs ont une épaisseur d'environ 50 à 100 nm.

21. Procédé selon la revendication 15, dans lequel le ou les segments conducteurs comprennent du poly(3,4-éthylènedioxythiophène) polystyrène sulfonate (PEDOT-PSS).

22. Procédé selon la revendication 15, dans lequel le milieu électrophorétique comprend un fluide non polaire et des particules de pigment chargées qui se rapprochent ou s'éloignent de la couche piézoélectrique lorsque la couche piézoélectrique est soumise à une contrainte mécanique, dans lequel le fluide non polaire et les particules de pigment chargées sont scellés dans les microcellules avec la couche de scellement.
